# FASCICULE DE BREVET EUROPEEN

(11) **EP 3 980 365 B1**
(45) Date de publication et mention de la délivrance du brevet: **08.11.2023**
(21) Numéro de dépôt: 20740365.0
(22) Date de dépôt: 02.06.2020
(51) Int. Cl.: B66F 9/065, B66F 17/00, B66F 9/075

(54) **ENGIN DE MANUTENTION DE CHARGE, PELLETEUSE MÉCANIQUE, CHARGEUSE À GODET OU AUTRE ET PROCÉDÉ DE COMMANDE D'UN ENGIN DE MANUTENTION DE CHARGE**
LASTHANDHABUNGSMASCHINE, MECHANISCHE SCHAUFEL, SCHAUFELLADER ODER DERGLEICHEN UND VERFAHREN ZUR STEUERUNG EINER LASTHANDHABUNGSMASCHINE
LOAD HANDLING MACHINE, MECHANICAL SHOVEL, BUCKET LOADER OR THE LIKE, AND METHOD FOR CONTROLLING A LOAD HANDLING MACHINE

(30) Priorité: 07.06.2019 FR 1906110; 07.06.2019 FR 1906109
(43) Date de publication de la demande: 13.04.2022
(73) Titulaire: MANITOU BF, 44150 Ancenis (FR)
(72) Inventeur: CADOU, Sylvain, 44150 ANCENIS (FR); LEBRETON, Philippe, 44150 ANCENIS (FR)
(74) Mandataire: Ipsilon
(86) Numéro de dépôt international: PCT/FR2020/050931
(87) Numéro de publication internationale: WO 2020/245532

(56) Documents cités:
- EP-A1- 1 953 027
- EP-A1- 3 431 435
- EP-A2- 0 981 078
- US-A- 5 109 945

## Description

La présente invention concerne un engin de manutention de charge, tel qu'un engin à bras de levage télescopique ou non, une pelleteuse mécanique, une chargeuse à godet ou autre, ainsi qu'un procédé de commande d'un engin de manutention de charge.

Elle concerne plus particulièrement un engin de manutention de charge comprenant :
- un châssis roulant équipé d'un poste de conduite ,
- un système d'entraînement en déplacement du châssis roulant
- un système de manutention de charge porté par le châssis,
- un dispositif de commande du système de manutention de charge, ce dispositif de commande, actionnable manuellement par un opérateur, comprenant une partie manuelle configurée pour être saisie manuellement,
- une unité de pilotage, l'unité de pilotage étant configurée pour recevoir des signaux de commande dudit dispositif de commande,
- un organe d'activation du dispositif de commande actionnable manuellement, une unité de pilotage, l'unité de pilotage étant configurée pour, à l'état actionné de l'organe d'activation, autoriser le pilotage du système de manutention en fonction au moins des signaux de commande reçus du dispositif de commande.

La réglementation impose, pour des raisons de sécurité, la mise en place de mesures empêchant la commande accidentelle du dispositif de commande sur les engins de manutention de charge. A titre d'exemple, une commande accidentelle peut être due au fait que l'opérateur reste accroché par un vêtement au dispositif de commande et le manoeuvre sans s'en rendre compte ou de manière involontaire. Pour résoudre ce problème, des engins de manutention de charge comprenant un organe d'activation du dispositif de commande pour éviter une commande accidentelle à l'aide du dispositif de commande ont été développés comme l'illustrent les brevets EP-0.981.078 et EP-1.523.704. Tel est le cas également du document EP-1.953.027. Le document EP-1.953.027 divulgue les caractéristiques du préambule de la revendication 1. Toutefois, la présence d'un tel organe d'activation contraint l'opérateur. On est donc à la recherche de solutions permettant de réduire les contraintes imposées à l'opérateur sans nuire à la sécurité de l'opérateur.

Un but de l'invention est de proposer un engin de manutention de charge du type précité dont la conception permet de réduire les contraintes imposées à l'opérateur sans nuire à la sécurité de l'opérateur.

A cet effet, l'invention a pour objet un engin de manutention de charge comprenant :
- un châssis équipé d'un poste de conduite ,
- un système de manutention de charge porté par le châssis,
   un dispositif de commande du système de manutention de charge , ce dispositif de commande, actionnable manuellement par un opérateur, comprenant une partie manuelle configurée pour être saisie manuellement,
- une unité de pilotage, l'unité de pilotage étant configurée pour recevoir des signaux de commande dudit dispositif de commande,
- un organe d'activation du dispositif de commande actionnable manuellement, l'unité de pilotage étant configurée pour, à l'état actionné de l'organe d'activation, autoriser le pilotage du système de manutention en fonction au moins des signaux de commande reçus du dispositif de commande,
caractérisé en ce que le poste de conduite est équipé d'un système de détection permettant de détecter une présence ou une absence de l'opérateur audit poste, ce système de détection comprenant au moins un capteur de présence distinct du dispositif de commande et en ce que l'unité de pilotage est configurée pour, à l'état non actionné de l'organe d'activation, après passage de l'état actionné à l'état non actionné de l'organe d'activation, empêcher ou autoriser le pilotage au moins du système de manutention avec le dispositif de commande au moins en fonction de l'état d'absence ou de présence de l'opérateur détecté par le système de détection d'une présence de l'opérateur audit poste. La présence d'un tel système de détection d'absence ou de présence de l'opérateur permet par exemple d'allonger les périodes pendant lesquelles l'organe d'activation peut rester à l'état non actionné sans nuire à la sécurité de l'opérateur.

Selon un mode de réalisation de l'invention, l'engin de manutention comprend un capteur d'un paramètre représentatif d'un déplacement de l'engin et l'unité de pilotage est configurée pour autoriser la commande du système de manutention avec le dispositif de commande en fonction au moins du paramètre représentatif d'un déplacement de l'engin. A nouveau, cette disposition permet de limiter les contraintes de l'opérateur à l'égard de l'organe d'activation et d'améliorer le confort de conduite pendant les phases de roulage de l'engin sans nuire à la sécurité de l'opérateur.

Selon un mode de réalisation de l'invention, le capteur d'un paramètre représentatif d'un déplacement de l'engin est un capteur d'un paramètre représentatif de la vitesse de déplacement de l'engin, en ce que l'engin comprend une mémoire de stockage d'une vitesse prédéterminée de déplacement de l'engin et en ce que l'unité de pilotage est configurée pour, à l'état non actionné de l'organe d'activation du dispositif de commande, autoriser la commande du système de manutention avec le dispositif de commande lorsque la vitesse de déplacement de l'engin fournie par le capteur d'un paramètre représentatif de la vitesse de déplacement de l'engin est supérieure à la valeur prédéterminée mémorisée.

Selon l'invention, l'unité de pilotage est configurée pour, lors du passage de l'état actionné à l'état non actionné de l'organe d'activation, démarrer au moins une temporisation dite de présence définissant un intervalle de temps, et pour empêcher le pilotage du système de manutention avec les signaux de commande fournis par le dispositif de commande à l'unité de pilotage à l'issue de l'écoulement de l'intervalle de temps défini par la temporisation de présence et l'unité de pilotage est configurée pour réinitialiser la temporisation de présence en fonction au moins de l'état d'absence ou de présence de l'opérateur détecté par le système de détection d'une présence de l'opérateur audit poste.

Selon un mode de réalisation de l'invention, l'unité de pilotage est configurée pour empêcher une réinitialisation de la temporisation de présence lorsque le système de détection d'une présence de l'opérateur audit poste détecte une absence de l'opérateur.

Selon un mode de réalisation de l'invention, l'unité de pilotage est configurée pour réinitialiser la temporisation de présence en fonction au moins des signaux de commande reçus du dispositif de commande.

Selon un mode de réalisation de l'invention, l'unité de pilotage est configurée pour réinitialiser la temporisation de présence en fonction des données fournies par le capteur d'un paramètre représentatif d'un déplacement de l'engin.

Selon un mode de réalisation de l'invention, l'unité de pilotage est configurée pour, lors du passage de l'état actionné à l'état non actionné de l'organe d'activation, démarrer au moins une temporisation dite temporisation de commande définissant un intervalle de temps, et pour empêcher le pilotage du système de manutention avec le dispositif de commande à l'issue de l'écoulement de l'intervalle de temps défini par la temporisation de commande et en que l'unité de pilotage est configurée pour réinitialiser la temporisation de commande en fonction au moins des données fournies par le capteur d'un paramètre représentatif d'un déplacement de l'engin et éventuellement en fonction au moins des signaux de commande reçus du dispositif de commande.

Selon un mode de réalisation de l'invention, l'intervalle de temps défini par la temporisation de commande est de durée supérieure à l'intervalle de temps défini par la temporisation de présence. Il est ainsi possible en présence de l'opérateur d'offrir un confort de conduite amélioré sans nuire à la sécurité de l'opérateur.

Selon un mode de réalisation de l'invention, le dispositif de commande du système de manutention est un dispositif de commande comprenant au moins deux éléments de commande.

Selon un mode de réalisation de l'invention, l'engin comprend un système d'entrainement en déplacement du châssis roulant, en ce que le dispositif de commande du système de manutention est un dispositif de commande polyvalent et en ce qu'au moins l'un des éléments de commande est configuré pour commander au moins une partie du système de manutention et en ce que l'autre élément de commande, ou un autre des éléments de commande est configuré pour commander au moins une partie du système d'entrainement en déplacement de l'engin.

Selon un mode de réalisation de l'invention, l'organe d'activation est porté par le dispositif de commande du système de manutention.

Selon un mode de réalisation de l'invention, l'organe d'activation est un capteur de détection de présence d'une main d'un opérateur sur la partie manuelle du dispositif de commande.

Selon un mode de réalisation de l'invention, le système de manutention comprend au moins un bras de manutention monté sur ledit châssis déplaçable en rotation autour d'un axe de rotation horizontal et au moins un actionneur d'entrainement en déplacement dudit bras de manutention autour dudit axe de rotation horizontal.

Selon un mode de réalisation de l'invention, le poste de conduite affecte la forme d'une cabine de pilotage à l'intérieur de laquelle est disposé au moins un siège sur lequel l'opérateur peut prendre place, ladite cabine de pilotage étant fermée par une porte et en ce que le ou au moins l'un des capteurs de présence du système de détection d'une présence de l'opérateur audit poste équipe le siège.

Selon un mode de réalisation de l'invention, le système de détection d'une présence de l'opérateur audit poste comprend au moins un capteur de détection de l'ouverture et/ou de la fermeture de la porte.

### Brève description des dessins

L'invention sera bien comprise à la lecture de la description suivante d'exemples de réalisation, en référence aux dessins annexés dans lesquels :
[Fig. 1] représente une vue schématique d'un engin de manutention de charge conforme à l'invention en position levée du bras de levage ;

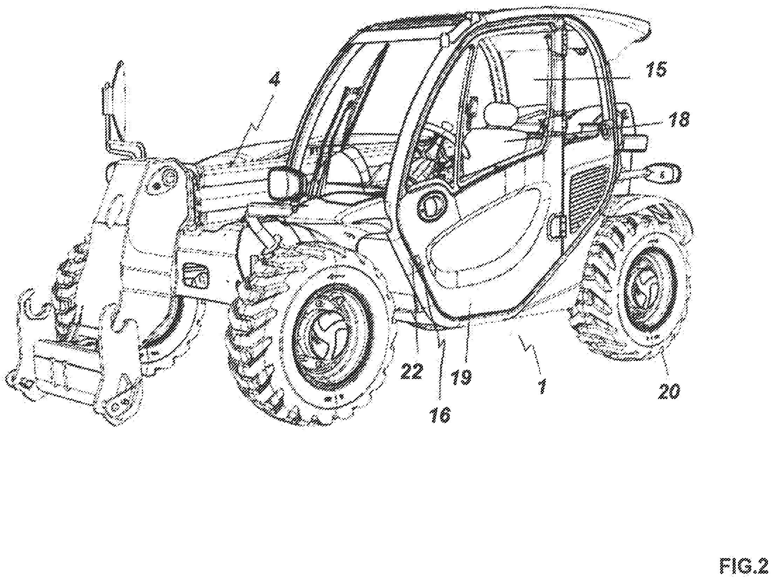

[Fig. 2] représente une vue en perspective d'un engin de manutention de charge conforme à l'invention en position abaissée du bras de levage ;
[Fig. 3] représente une vue partielle d'un dispositif de commande prise côté organe d'activation ;
[Fig. 4] représente une vue partielle d'un dispositif de commande prise côté opposé à l'organe d'activation ;

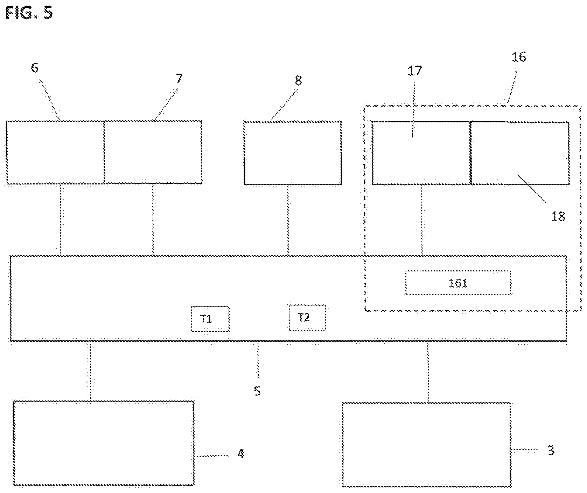

[Fig. 5] est une représentation schématique de composants de l'engin ;
[Fig. 6] est une représentation schématique d'un procédé de commande pouvant être mis en oeuvre par l'engin de manutention de la figure 1 ;
[Fig. 7] est une représentation schématique d'un procédé de commande pouvant être mis en oeuvre par la machine de manutention de la figure 1.

Le concept de l'invention est décrit plus complètement ci-après avec référence aux dessins joints, sur lesquels des modes de réalisation du concept de l'invention sont montrés.

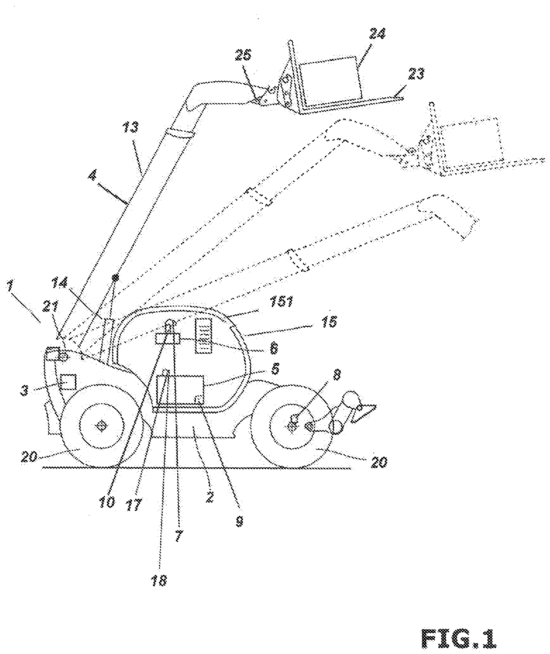

Comme mentionné ci-dessus, l'invention concerne un engin 1 de manutention de charge conforme à celui représenté à la figure 1. Cet engin 1 comprend un châssis 2. Dans l'exemple représenté, ce châssis 2 est équipé de roues 20 d'appui au sol pour former un châssis 2 roulant. Ce châssis 2 est surmonté d'un poste 15 de conduite. Le poste 15 de conduite affecte la forme d'une cabine 151 de pilotage à l'intérieur de laquelle est disposé au moins un siège 18 sur lequel l'opérateur peut prendre place. La cabine 151 de pilotage est fermée par une porte 19. L'engin 1 peut encore comprendre, comme dans l'exemple représenté, un système 3 d'entraînement en déplacement du châssis 2 roulant par entraînement en déplacement en rotation des roues 20 de l'engin 1. Ce système 3 d'entraînement du châssis 2 comprend, de manière en soi connue, un moteur thermique relié aux roues 20 par une transmission. Ce système 3 d'entraînement en déplacement du châssis 2 est commandé notamment à l'aide d'une pédale d'accélérateur non représentée disposée dans la cabine 151 de pilotage.

L'engin 1 de manutention comprend encore un système 4 de manutention de charge porté par le châssis 2. Ce système 4 de manutention comprend au moins un bras 13 de manutention monté sur ledit châssis 2 déplaçable en rotation autour d'un axe 21 de rotation horizontal et au moins un actionneur 14 d'entraînement en déplacement dudit bras 13 de manutention autour de l'axe 21 de rotation horizontal. Le bras 13 de manutention est donc un bras pivotant monté à pivotement autour de l'axe 21 horizontal, orthogonal à l'axe longitudinal du bras, pour le passage du bras 13 d'une position basse à une position haute et inversement à l'aide de l'actionneur 14, tel qu'un vérin hydraulique relié à une pompe hydraulique par un circuit hydraulique, la pompe et le circuit n'étant pas représentés. Le bras peut être un bras télescopique de longueur ajustable entre une position rentrée et une position sortie du bras. A cet effet, le bras 13 peut être formé de deux sections de bras dont l'une, dite première section, est couplée à pivotement au châssis 10 et dont l'autre, dite deuxième section, est montée à emboîtement coulissant par rapport à la première section de bras. En variante, le bras peut ne pas être télescopique.

Le déplacement à emboîtement coulissant entre les sections de bras peut être obtenu à l'aide d'un deuxième actionneur de l'engin, tel qu'un vérin double effet, logé dans la première section de bras et fixé par sa tige à la deuxième section de bras pour permettre un entrainement en déplacement relatif des sections de bras sous l'effet d'une rentrée ou d'une sortie de la tige de vérin.

Le bras 13 de manutention de charge peut être équipé, à son extrémité libre, d'un accessoire 23 relié au bras par une liaison à pivotement. Cet accessoire 23 peut être entraîné autour du pivot de la liaison pivot par un actionneur 25 qui peut être à nouveau formé par un vérin hydraulique double effet ou de deux vérins parallèles simple effet alimentés tour à tour.

Dans l'exemple représenté, cet accessoire 23 comprend un porte-fourches et l'actionneur 25 permet l'entraînement en déplacement du porte-fourches entre une position de cavage et une position de déversement par pivotement de l'accessoire autour d'un axe dit horizontal orthogonal à l'axe longitudinal du bras 13. Cet axe pivot est parallèle à l'axe 21 pivot de liaison du bras 13 au châssis 10. La position de déversement correspond à la position extrême de pivotement vers le sol du porte-fourches. La position de cavage du porte-fourches correspond à une position de pivotement vers le haut du porte-fourches et de la charge 24 associée lorsque cette dernière est présente.

L'engin 1 de manutention comprend encore une unité 5 de pilotage configurée pour commander le fonctionnement des actionneurs 14 et 25 et éventuellement l'actionnement de sortie du télescope lorsqu'il est présent, ce qui permet de piloter le déplacement du bras 13 et de l'accessoire 23.

L'unité 5 de pilotage est une unité électronique et/ou informatique qui comprend, par exemple, un microcontrôleur ou un microprocesseur associé à une mémoire. Ainsi, lorsqu'il est précisé que l'unité ou des moyens de ladite unité sont configurés pour réaliser une opération donnée, cela signifie que l'unité comprend des instructions informatiques et les moyens d'exécution correspondants qui permettent de réaliser ladite opération et/ou des composants électroniques correspondants.

Autrement dit, les fonctions et étapes décrites peuvent être mises en oeuvre sous forme de programme informatique ou via des composants matériels (p. ex. des réseaux de portes programmables). En particulier, les fonctions et étapes opérées par l'unité 5 de pilotage peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

L'unité 5 de pilotage commande donc le système 4 de manutention et, en particulier, les déplacements du bras 13 et de l'accessoire 23 en commandant les actionneurs 14 et 25 correspondants par l'intermédiaire du circuit hydraulique.

Les signaux de commande fournis par l'unité 5 de pilotage agissent généralement sur des organes, tels que distributeur ou valve, disposés sur la liaison entre la pompe et les actionneurs 14, 25 pour permettre une alimentation en fluide appropriée des actionneurs 14, 25 de manière en soi-connue.

L'engin 1 de manutention comprend encore un dispositif 6 de commande du système 4 de manutention de charge. Ce dispositif 6 de commande est à actionnement manuel et permet de fournir des signaux de commande à l'unité 5 de pilotage. Ces signaux de commande sont traités par l'unité 5 de pilotage. L'unité 5 de pilotage génère, à partir de ces signaux de commande, des signaux de commande au moins du système 4 de manutention de charge comme décrit ci-dessus.

Dans les exemples représentés, le dispositif 6 de commande du système 4 de manutention de charge est un dispositif 6 de commande polyvalent. En effet, le dispositif 6 de commande permet de commander, d'une part, le système 4 de manutention, d'autre part, le système 3 d'entraînement en déplacement de l'engin 1. En variante, le dispositif 6 de commande aurait pu être un dispositif de commande permettant uniquement la commande du système 4 de manutention. Dans ce qui suit, il sera toujours considéré que le dispositif 6 de commande est un dispositif de commande polyvalent. Ainsi, ce dispositif 6 de commande du système 4 de manutention comprend au moins deux éléments de commande. Dans les exemples représentés, l'un des éléments de commande, représentés en 10 aux figures est configuré pour commander au moins une partie 4 du système de manutention et un autre élément de commande, représenté en 11 aux figures, est configuré pour commander au moins une partie du système 3 d'entraînement en déplacement de l'engin 1. D'autres éléments de commande, représentés en 12a et 12b aux figures, sont également présents. Ce dispositif 6 de commande peut affecter un grand nombre de formes.

Dans l'exemple représenté aux figures 1, 3 et 4, l'élément 10 de commande du dispositif 6 de commande du système 4 de manutention est un levier ou joystick manipulable à la main par le conducteur de l'engin et les autres éléments 11, 12a, 12b de commande sont portés par ledit levier. Ces autres éléments de commande sont disposés au niveau du pommeau du levier. Ce pommeau de levier correspond à la partie 61 manuelle du dispositif 6 de commande configurée pour être saisie à l'état saisi manuellement du dispositif de commande conformément à sa destination.

Un tel dispositif de commande est bien connu à ceux versés dans cet art et un exemple d'un tel dispositif de commande est décrit par exemple dans le brevet FR-2.858.861.

Le levier de commande ou joystick transmet des signaux de position dudit levier à l'unité 5 de pilotage de manière en soi-connue. Ces signaux de position peuvent être interprétés par l'unité de pilotage 5 comme des signaux d'instruction de déplacement du bras 13 et/ou de l'accessoire 23.

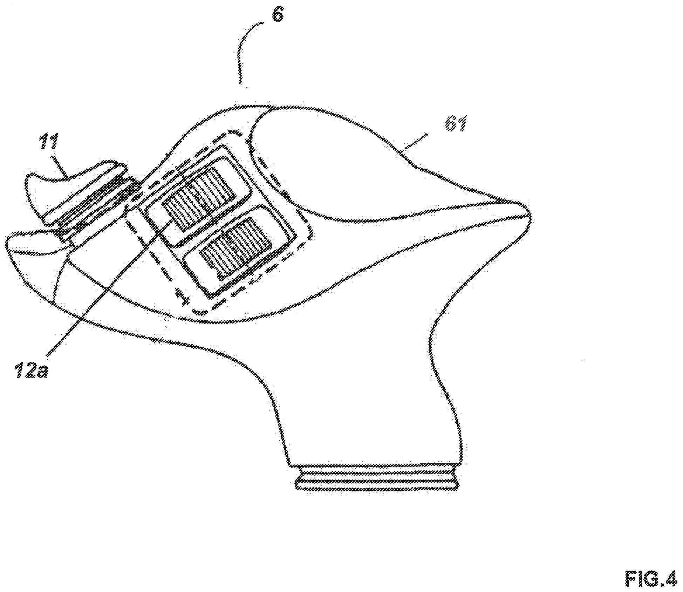

Selon un mode de réalisation, le levier de commande peut ainsi être déplacé vers l'avant, vers l'arrière, vers la gauche ou vers la droite de l'engin. Dans l'exemple représenté, ce levier de commande mobile au moins suivant la direction avant/arrière de l'engin est monté mobile, vers l'avant, pour la commande de la descente du bras 13 et vers l'arrière, pour la commande de la levée du bras 13. Le mouvement avant/arrière du levier de commande peut donc commander le fonctionnement du premier actionneur 14 entre bras 13 et châssis 2. Ce levier 10 de commande peut encore être monté mobile suivant la direction gauche/droite, transversale à la direction avant/arrière, vers la gauche pour la commande de la position de cavage, et vers la droite pour la commande de la position de déversement de l'accessoire 23. Le mouvement gauche/droite du levier de commande commande donc le fonctionnement de l'actionneur 25 entre accessoire 23 et bras 13. Ces directions avant/arrière et gauche/droite correspondent aux directions principales et le levier de commande peut être entraîné suivant une infinité de directions, le déplacement du levier de commande suivant une direction quelconque correspondant à une action combinée proportionnellement à la position du levier de commande par rapport aux directions principales. Comme illustré à la figure 4, le levier de commande peut être équipé d'un élément 12a de commande, tel qu'une molette, pour la commande de l'actionneur de sortie de télescope dans le cas d'un bras 13 télescopique. Ainsi, la rotation de la molette portée par le levier de commande dans un sens permet la sortie du bras 13 par déplacement à coulissement, dans le sens d'une extension du bras 13, de la deuxième section de bras, et la rotation de la molette portée par le levier dans un sens opposé permet la rentrée du bras.

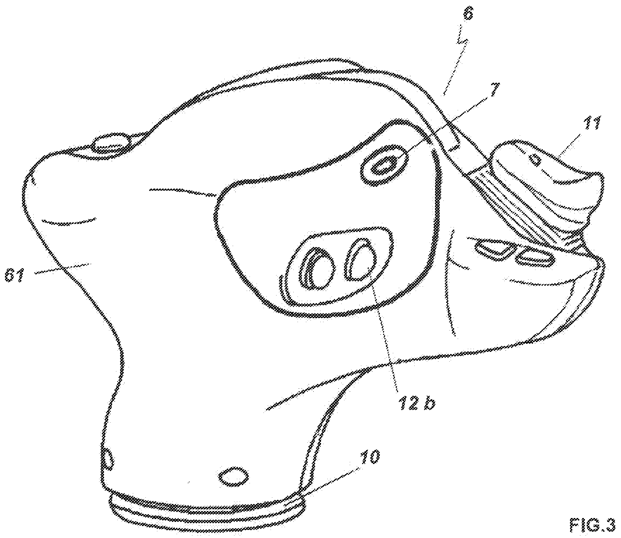

D'autres boutons, molettes ou autres, tels que celui représenté en 12b à la figure 3, peuvent être prévus pour commander certaines fonctions de l'accessoire. L'un des éléments de commande, représenté en 11 aux figures, est configuré pour commander au moins une partie du système 3 d'entraînement en déplacement de l'engin. Cet élément 11 de commande peut être formé par un bouton inverseur à trois positions stables pour faire fonctionner l'engin en marche avant, l'arrêter en position neutre ou le faire fonctionner en marche arrière. La transmission du système 3 d'entraînement en déplacement du châssis 2 peut comprendre une boîte de vitesse et la commande de montée et de descente de rapport de la boîte de vitesse peut être effectuée à l'aide d'un bouton poussoir ou autre organe de commande porté par le levier. On comprend que ces éléments de commande peuvent donc, de manière non limitative, être réalisés sous forme de molette, d'interrupteur, de bouton, de commutateur, de capteur, notamment de capteur à effet hall, de potentiomètre ou autre.

Le levier et les éléments de commande portés par le levier sont actionnables à l'aide d'une seule main de l'opérateur à l'état positionné de la main de l'opérateur sur la partie 61 manuelle du dispositif 6 de commande formée ici par au moins une partie du pommeau du levier de commande.

L'engin 1 de manutention comprend encore un organe 7 d'actionnement du dispositif 6 de commande actionnable manuellement. Cet organe 7 d'activation est porté par le dispositif 6 de commande du système 4 de manutention.

L'organe 7 d'activation est un capteur de présence permettant de détecter la présence d'une main d'un opérateur sur ledit dispositif 6 de commande à l'état saisi manuellement du dispositif 6 de commande conformément à sa destination. En particulier, l'organe 7 d'activation est un capteur de présence disposé sur la partie 61 manuelle du dispositif 6 de commande. Cet organe 7 d'activation, à actionnement manuel, est donc configuré pour passer de l'état non actionné à l'état actionné en présence de la main sur la partie 61 manuelle du dispositif 6 de commande et inversement de l'état actionné à l'état non actionné en l'absence de la main sur la partie 61 manuelle du dispositif 6 de commande. Il doit être noté que le terme "actionné" doit être pris dans son acceptation la plus large. Actionner l'organe 7 d'activation signifie solliciter l'organe 7 d'activation. L'actionnement de l'organe 7 d'activation peut donc, à titre non limitatif, s'opérer par simple contact, par appui ou pression, par présence de la main à une distance inférieure à une distance prédéterminée ou autre sans sortir du cadre de l'invention.

L'organe 7 d'activation peut, à titre d'exemple, être réalisé sous forme d'un bouton de type bouton-poussoir ou d'un capteur de type capacitif. La présence de la main en regard de l'organe 7 d'activation, y compris sans contact, peut suffire à l'actionnement de l'organe 7 d'activation dans le cas d'un capteur de type capacitif.

Le rôle de cet organe 7 d'activation du dispositif 6 de commande sera décrit ci-après.

L'engin 1 de manutention peut encore comprendre un capteur 8 d'un paramètre représentatif d'un déplacement de l'engin. L'unité 5 de pilotage est configurée pour recevoir les données fournies par ce capteur 8. L'unité de pilotage est configurée pour autoriser le pilotage du système de manutention avec le dispositif de commande en fonction au moins des données fournies par ce capteur 8. Ce capteur 8 peut affecter un grand nombre de formes. De préférence, ce capteur 8 d'un paramètre représentatif d'un déplacement de l'engin 1 est un capteur d'un paramètre représentatif de la vitesse de déplacement de l'engin 1 et l'unité de pilotage configurée pour autoriser le pilotage du système de manutention avec le dispositif de commande en fonction au moins du paramètre représentatif d'un déplacement de l'engin est configurée pour autoriser le pilotage du système de manutention avec le dispositif de commande en fonction au moins du paramètre représentatif de la vitesse de déplacement de l'engin. Ce capteur 8 de vitesse peut être un capteur de mesure de la vitesse de rotation des roues ou de tout autre organe mécanique représentatif de la vitesse de déplacement de l'engin. Une détection de vitesse non nulle peut également s'opérer par détection de l'entraînement d'un organe de transmission en prise avec les roues.

Enfin, l'engin 1 comprend, au niveau du poste 15 de conduite, un système 16 de détection d'une présence de l'opérateur au poste de conduite. Ce système 16 de détection qui permet de détecter une absence ou une présence de l'opérateur audit poste comprend au moins un capteur 17 de présence. Ce capteur 17 de présence est distinct de la partie 61 manuelle du dispositif 6 de commande. L'unité 5 de pilotage est configurée pour, à l'état non actionné de l'organe 7 d'activation, l'état non actionné de l'organe 7 d'activation résultant du passage de l'état actionné à l'état non actionné de l'organe 7 d'activation, empêcher ou autoriser le pilotage au moins du système 4 de manutention avec le dispositif 6 de commande au moins en fonction de l'état d'absence ou de présence de l'opérateur détecté par le système 16 de détection d'une présence de l'opérateur audit poste 15.

Dans les exemples représentés, le capteur 17 de présence du système 16 de détection est un capteur équipant le siège 18 de l'opérateur et sensible à la pression du poids exercé par celui-ci sur l'assise du siège. Ce capteur est à l'état actif et émet un signal, lorsque l'opérateur est assis sur son siège. Le système 16 de détection peut encore comprendre un capteur 22 de détection de l'ouverture/fermeture de la porte 19 de la cabine 151. Ce capteur est à l'état actif et émet un signal, lorsque la porte est à l'état fermé. Le système 16 de détection comprend encore un module 161 de traitement permettant de traiter les signaux desdits capteurs 17 et 22 pour détecter la présence ou l'absence de l'opérateur. Ce module 161 de traitement peut être intégrée à l'unité 5 de pilotage. L'unité 5 de pilotage est configurée pour, à l'état non actionné de l'organe 7 d'activation, après passage de l'état actionné à l'état non actionné de l'organe 7 d'activation, empêcher que le système 4 de manutention soit piloté avec le dispositif 6 de commande lorsque l'absence de l'opérateur est détectée comme expliqué ci-après. Il doit être noté que la présence d'un opérateur est détectée par le système 16 de détection lorsque le capteur 17 de présence situé au niveau du siège 18 est actif ou, lorsque la porte étant détectée à l'état fermé par le capteur 22 de détection de l'ouverture/fermeture de la porte 19, le capteur 17 de présence situé au niveau du siège est à l'état inactif et est passé de l'état actif à l'état inactif à l'état fermé de la porte sans détection d'une ouverture de la porte. Les signaux de ces capteurs sont adressés au module 161 de traitement.

Comme expliqué ci-après, l'unité 5 de pilotage est configurée pour autoriser ou empêcher le pilotage de l'engin, en particulier du système 4 de manutention et éventuellement du système 3 d'entraînement en déplacement du châssis roulant à partir du dispositif 6 de commande.

L'unité 5 de pilotage est configurée pour recevoir des signaux de l'organe 7 d'activation à l'état actionné de l'organe 7 d'activation. Ainsi, dans le cas où l'organe 7 d'activation est un bouton poussoir, un signal d'actionnement de l'organe 7 d'activation est fourni à l'unité 5 de pilotage lors de l'enfoncement du bouton poussoir par la main de l'opérateur posée sur le système 6 de commande.

Dans le cas d'un organe 7 d'activation formé par un capteur capacitif, un signal est fourni à l'unité 5 de pilotage par simple positionnement de la main de l'opérateur sur le dispositif 6 de commande en regard dudit capteur.

A l'état actionné de l'organe 7 d'activation, le pilotage du système 4 de manutention et éventuellement d'au moins une partie du système 3 d'entraînement en déplacement est autorisé en fonction au moins des signaux de commande reçus du dispositif 6 de commande, ces signaux de commande résultant de l'actionnement par l'opérateur du dispositif 6 de commande comme décrit ci-dessus.

Grâce à la présence du système 16 de détection, l'interdiction de la commande notamment du système 4 de manutention à partir du dispositif 6 de commande peut s'opérer de manière très réactive, lorsque l'état d'absence de l'opérateur est détectée En particulier, l'unité 5 de pilotage est configurée pour démarrer au moins une temporisation dite temporisation T2 de présence définissant un intervalle de temps lors du passage de l'état actionné à l'état non actionné de l'organe 7 d'activation, et pour empêcher le pilotage du système 4 de manutention avec le dispositif 6 de commande à l'issue de l'écoulement de l'intervalle de temps défini par la temporisation T2 de présence. L'unité 5 de pilotage est configurée pour réinitialiser la temporisation T2 de présence en fonction au moins des signaux fournis par le système 16 de détection d'une présence de l'opérateur audit poste 19.

En pratique, l'unité 5 de pilotage est configurée pour empêcher la réinitialisation de la temporisation T2 de présence tant qu'une absence de l'opérateur au poste 19 de conduite est détectée. Cette absence de l'opérateur peut correspondre :
- soit à une absence de signal du capteur 17 de détection de présence équipant le siège 18 du poste 15 de conduite à l'état ouvert de la porte 19 de la cabine 151 de pilotage
- soit, à l'état fermé de la porte 19, à une absence de signal du capteur 17 de détection de présence équipant le siège 18 du poste 15 de conduite, l'absence de signal du capteur 17 de détection de présence ayant débuté à l'état ouvert de la porte.

L'engin 1 comprend au moins une temporisation T1, dite temporisation de commande, définissant un intervalle de temps qui peut être prédéfini ou réglable. Cette temporisation T1 de commande est, comme la temporisation T2 de présence, de manière classique, réalisée par une horloge et un comptage du temps dans le sens d'une incrémentation ou d'une décrémentation de ce comptage jusqu'à écoulement de l'intervalle de temps défini par la temporisation T1 ou respectivement T2. Ladite horloge est, de préférence, intégrée à l'unité 5 de pilotage. Cette temporisation T1 de commande démarre lors du passage de l'état actionné à l'état non actionné de l'organe 7 d'activation, c'est-à-dire lors du relâchement du bouton-poussoir ou d'un enlèvement de la main d'une position en regard du capteur capacitif. L'unité 5 de pilotage empêche que le système 4 de manutention et éventuellement au moins une partie du système 3 d'entraînement en déplacement du châssis 2 soient pilotés avec le dispositif 6 de commande, c'est-à-dire à partir ou par l'intermédiaire du dispositif 6 de commande à l'issue de l'écoulement de l'intervalle de temps défini par la temporisation T1 de commande.

Pour empêcher une telle interdiction pendant la phase de roulage de l'engin 1, l'unité 5 de pilotage est configurée pour, pendant l'écoulement de l'intervalle de temps défini par la temporisation T1 de commande, réinitialiser la temporisation T1 de commande, c'est-à-dire reprendre à son commencement le comptage ou respectivement le décomptage de l'intervalle de temps défini par la temporisation T1 de commande en fonction au moins des données fournies par le capteur 8 de vitesse de déplacement de l'engin 1.

En particulier, l'engin 1 comprend une mémoire 9 de stockage d'une vitesse prédéterminée de déplacement de l'engin 1 et l'unité 5 de pilotage est configurée pour réinitialiser la temporisation T1 lorsque la vitesse de déplacement de l'engin 1 fournie par le capteur 8 de vitesse de déplacement de l'engin est supérieure à la vitesse prédéterminée mémorisée.

Ainsi, à titre d'exemple, l'unité 5 de pilotage est configurée pour réinitialiser la temporisation T1 lorsque la vitesse de l'engin est par exemple supérieure à 1 km/h.

De la même manière, pour empêcher une telle interdiction de commande, alors que le dispositif 6 de commande est actionné par l'opérateur, l'unité 5 de pilotage est également configurée pour réinitialiser la temporisation T1 de commande en fonction au moins des signaux de commande reçus du dispositif 6 de commande.

Ainsi, après passage de l'état actionné à l'état non actionné de l'organe 7 d'activation, tant que le dispositif 6 de commande est actionné, c'est-à-dire tant que le levier ou l'un quelconque des éléments de commande portés par le levier sont actionnés à l'intérieur de l'intervalle de temps défini par la temporisation T1 de commande, la commande, à partir du dispositif 6 de commande, reste possible. Cette commande, à partir du dispositif 6 de commande, cesse dès lors que le dispositif 6 de commande est resté non actionné pendant une durée supérieure à l'intervalle de temps prédéfini par la temporisation T1 et que la vitesse de déplacement de l'engin est inférieure à une vitesse prédéterminée. Un nouvel actionnement de l'organe 7 d'activation est nécessaire pour rendre à nouveau possible cette commande à partir du dispositif 6 de commande.

Il doit être noté que la temporisation T2 de présence définit un intervalle de temps de durée inférieure à l'intervalle de temps de la temporisation T1 de commande pour interdire au plus vite une commande à partir du dispositif 6 de commande lorsqu'une absence de l'opérateur est détectée. En cas de détection d'une présence de l'opérateur, cette temporisation T2 de présence est réinitialisée si le dispositif 6 de commande est actionné à l'intérieur de l'intervalle de temps défini par la temporisation T2 de présence ou si la vitesse de déplacement de l'engin est supérieure à une vitesse prédéterminée. Sinon, la temporisation T2 de présence n'est pas réinitialisée.

### Exemple de procédé de commande :

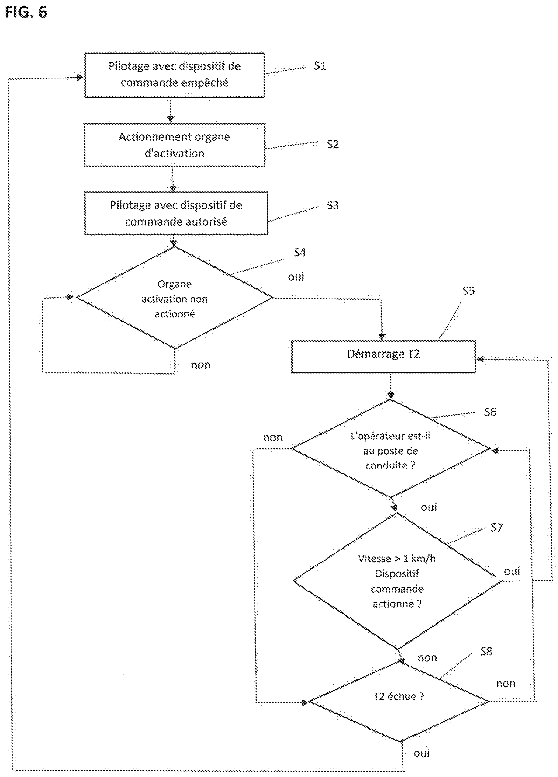

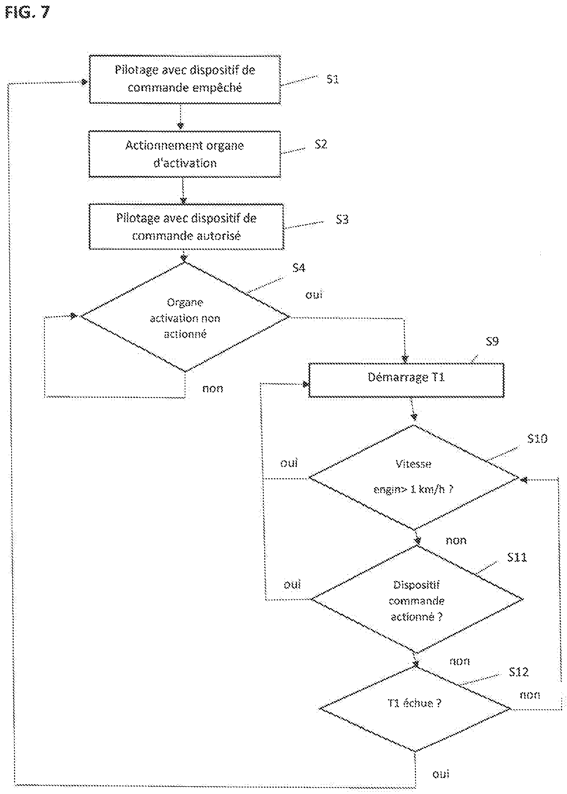

L'unité de commande peut être configurée pour mettre en oeuvre un procédé de commande de l'engin, tel que représenté aux figures 6 et 7. Comme expliqué ci-après, le procédé de commande sert à autoriser ou empêcher la commande du système 4 de manutention et éventuellement d'au moins une partie du système 3 d'entraînement en déplacement de l'engin à partir du dispositif 6 de commande en se basant notamment sur la présence de l'opérateur au poste de conduite. Selon un aspect particulier, le procédé est exécuté en temps réel. Dans ce qui suit, on considère que le dispositif 6 de commande peut générer des signaux de commande à la fois du système 4 de manutention et d'au moins une partie du système 3 d'entraînement en déplacement de l'engin. En variante, le dispositif 6 de commande aurait pu générer uniquement des signaux de commande du système 4 de manutention sans sortir du cadre de l'invention.

A l'étape S1, l'organe 7 d'activation est non actionné et le pilotage du système 4 de manutention et d'au moins une partie du système 3 d'entraînement en déplacement à partir du dispositif 6 de commande est empêché.

A l'étape S2, l'organe 7 d'activation est actionné par enfoncement du bouton pression ou position de la main en regard du capteur capacitif. Il fournit donc à l'unité 5 de pilotage un signal d'actionnement.

A l'étape S3, l'unité de pilotage autorise à partir de ce signal d'actionnement la commande du système 4 de manutention et d'au moins une partie du système 3 d'entraînement à partir des signaux de commande fournis par le dispositif 6 de commande.

A l'étape S4, le procédé de commande teste si l'organe 7 d'activation est à l'état non actionné, c'est-à-dire si un signal de non actionnement de l'organe 7 d'activation est fourni par l'organe 7 d'activation. Le procédé de commande boucle sur cette étape S4 jusqu'à ce que l'organe 7 d'activation soit non actionné.

A l'état non actionné de l'organe 7 d'activation, le procédé de commande passe à l'étape S5 où la temporisation T2 définissant un intervalle de temps de 5 secondes par exemple démarre. Le délai de 5 secondes commence à être compté et le procédé de commande passe à l'étape S6.

A l'étape S6, le système 16 de détection détecte, en fonction des signaux fournis par le capteur 17 de présence de l'opérateur au poste 15, en particulier sur le siège 18 du poste 15 de conduite et éventuellement des signaux fournis par le capteur 22 de détection de l'ouverture/fermeture de la porte 19 et du traitement desdits signaux, la présence ou l'absence d'un opérateur au poste 15 de conduite.

Lorsque le système 16 de détection comprend un capteur 17 de présence, une absence de l'opérateur du poste de conduite est détectée, par exemple si aucun signal n'est fourni par le capteur 17 de présence. Lorsque le système 16 de détection comprend un capteur 17 de présence et un capteur 22 de détection de l'ouverture/fermeture de la porte, une absence de l'opérateur du poste de conduite est détectée, par exemple si aucun signal n'est fourni par le capteur 17 de présence et si la porte est détectée comme ouverte. Le procédé de commande passe alors à une étape S13 où il est vérifié si l'intervalle de temps défini par la temporisation T2 de présence est écoulé. Le procédé de commande teste en boucle les étapes S11 et S13 tant que l'intervalle de temps de la temporisation T2 de présence n'est pas écoulé. Si l'intervalle de temps défini par la temporisation T2 de présence est écoulé, alors le procédé de commande retourne à l'étape S1.

Si à l'inverse, à l'étape S6, le système 16 de détection détecte, en fonction des signaux fournis par le capteur 17 de détection de présence de l'opérateur au poste 15 de conduite et par le capteur 22 de détection de l'ouverture/fermeture de la porte et du traitement desdits signaux, une présence de l'opérateur au poste de conduite, par exemple si un signal de présence est fourni par le capteur 17 de présence, alors le procédé de commande passe à l'étape S7.

A l'étape S7, la vitesse de l'engin est comparée avec une valeur de vitesse seuil mémorisée, généralement égale à 1 km/h. Si la vitesse est supérieure à la vitesse seuil, alors le procédé de commande retourne à l'étape S5 pour démarrer à nouveau la temporisation T2 de présence, ce qui correspond à une réinitialisation de la temporisation T2. Le délai de 5 secondes commence donc à nouveau à être compté. A cette même étape S7, si la vitesse est inférieure à la valeur seuil, l'actionnement du dispositif 6 de commande est testé.

L'unité 5 de pilotage dispose d'un module de traitement des signaux de commande fourni par le dispositif 6 de commande. Dans la version la plus simple, la seule réception par l'unité 5 de pilotage de signaux de commande fournis par le dispositif 6 de commande indépendamment du type de signal peut être considérée par l'unité 5 de pilotage comme un actionnement du dispositif 6 de commande. Si le dispositif 6 de commande est actionné alors le procédé de commande retourne à l'étape S5 où la temporisation T2 de présence est de nouveau réinitialisée. Si le dispositif 6 de commande est non actionné alors le procédé de commande passe à l'étape S8 où le temps écoulé à l'intérieur de l'intervalle de temps défini par la temporisation T2 de présence depuis une initialisation de la temporisation T2 est comparé à la durée totale de l'intervalle de temps de la temporisation. Lorsque ce temps écoulé est supérieur à la durée de l'intervalle de temps défini par la temporisation, la temporisation T2 de présence est considérée comme échue et le procédé de commande retourne alors à l'étape S1. Sinon le procédé de commande retourne à l'étape S5 pour effectuer une nouvelle réinitialisation de la temporisation T2 et réexécuter éventuellement les étapes S6 et S7.

De manière résumée, dans ce procédé de commande de la figure 6 à l'état non actionné de l'organe 7 d'activation et à l'état démarré de la temporisation T2 de présence, lorsqu'une absence de l'opérateur est détectée à l'aide du système 16 de détection et que le temps écoulé depuis le démarrage de la temporisation T2 est supérieur à l'intervalle de temps défini par ladite temporisation T2, la commande à l'aide du dispositif 6 de commande est empêchée et un nouvel actionnement de l'organe 7 d'activation est nécessaire pour pouvoir commander au moins le système 4 de manutention à partir du dispositif 6 de commande.

A l'étape S4, le procédé de commande passe en parallèle à l'étape S5 et à l'étape S9 où une temporisation T1, dite temporisation de commande, est démarrée.

A l'étape **10**, la vitesse de l'engin est comparée avec une valeur de vitesse seuil mémorisée, généralement égale à 1 km/h. Si la vitesse est supérieure à la vitesse seuil, alors le procédé de commande retourne à l'étape S9 pour démarrer à nouveau la temporisation T1 de commande, ce qui correspond à une réinitialisation de la temporisation T1. Le délai de 10 secondes commence donc à nouveau à être compté. Si la vitesse est inférieure à la vitesse seuil, alors le procédé de commande passe à l'étape S11 où l'actionnement du dispositif 6 de commande est testé de manière similaire à l'étape S7. Si le dispositif 6 de commande est actionné, alors le procédé de commande retourne à l'étape S9 où la temporisation T1 de commande est de nouveau réinitialisée. Si le dispositif 6 de commande est non actionné alors le procédé de commande passe à l'étape S12 où le temps écoulé à l'intérieur de l'intervalle de temps défini par la temporisation T1 de commande depuis une initialisation de la temporisation T1 est comparé à la durée totale de l'intervalle de temps de la temporisation. Lorsque ce temps écoulé est supérieur à la durée de l'intervalle de temps défini par la temporisation, la temporisation T1 de commande est considérée comme échue et le procédé de commande retourne alors à l'étape S1. Sinon le procédé de commande retourne à l'étape S9 pour effectuer une nouvelle réinitialisation de la temporisation T1 de commande et réexécuter éventuellement les étapes S10 et S11.

Ainsi, en résumé, à l'état non actionné de l'organe 7 d'activation et démarré de la temporisation T1, si la vitesse de déplacement de l'engin est inférieure à 1 km/h, et si le dispositif 6 de commande est non actionné à l'intérieur de l'intervalle de temps défini par la temporisation T1, alors, à l'issue de l'intervalle de temps T1, la commande à l'aide du dispositif 6 de commande est empêchée et un nouvel actionnement de l'organe 7 d'activation est nécessaire pour pouvoir commander au moins le système 4 de manutention à partir du dispositif 6 de commande.

Il doit être noté que l'intervalle de temps défini par la temporisation T2 de présence est inférieur à l'intervalle de temps défini par la temporisation T1 de commande.

## Revendications

1. Engin (1) de manutention de charge (24) comprenant :
- un châssis (2) équipé d'un poste (15) de conduite,
- un système (4) de manutention de charge porté par le châssis,
un dispositif (6) de commande du système (4) de manutention de charge, ce dispositif (6) de commande, actionnable manuellement par un opérateur, comprenant une partie (61) manuelle configurée pour être saisie manuellement,
- une unité (5) de pilotage, l'unité (5) de pilotage étant configurée pour recevoir des signaux de commande dudit dispositif (6) de commande,
- un organe (7) d'activation du dispositif (6) de commande actionnable manuellement, l'unité (5) de pilotage étant configurée pour, à l'état actionné de l'organe (7) d'activation, autoriser le pilotage du système (4) de manutention en fonction au moins des signaux de commande reçus du dispositif (6) de commande,
le poste (15) de conduite étant équipé d'un système (16) de détection permettant de détecter une présence ou une absence de l'opérateur audit poste (15), ce système (16) de détection comprenant au moins un capteur (17) de présence distinct du dispositif (6) de commande, (5) de pilotage étant configurée pour, à l'état non actionné de l'organe (7) d'activation, après passage de l'état actionné à l'état non actionné de l'organe (7) d'activation, empêcher ou autoriser le pilotage au moins du système (4) de manutention avec le dispositif (6) de commande au moins en fonction de l'état d'absence ou de présence de l'opérateur détecté par le système (16) de détection d'une présence de l'opérateur audit poste (15), **caractérisé en ce que** l'unité (5) de pilotage est configurée pour, lors du passage de l'état actionné à l'état non actionné de l'organe (7) d'activation, démarrer au moins une temporisation (T2) dite de présence définissant un intervalle de temps, et pour empêcher le pilotage du système (4) de manutention avec les signaux de commande fournis par le dispositif (6) de commande à l'unité (5) de pilotage à l'issue de l'écoulement de l'intervalle de temps défini par la temporisation (T2) de présence et en que l'unité (5) de pilotage est configurée pour réinitialiser la temporisation (T2) de présence en fonction au moins de l'état d'absence ou de présence de l'opérateur détecté par le système (16) de détection d'une présence de l'opérateur audit poste (15).

2. Engin (1) de manutention de charge (24) selon la revendication 1, **caractérisé en ce que** l'engin (1) de manutention comprend un capteur (8) d'un paramètre représentatif d'un déplacement de l'engin (1) et **en ce que** l'unité (5) de pilotage est configurée pour autoriser la commande du système (4) de manutention avec le dispositif (6) de commande en fonction au moins du paramètre représentatif d'un déplacement de l'engin (1).

3. Engin (1) de manutention de charge (24) selon la revendication 2, **caractérisé en ce que** le capteur (8) d'un paramètre représentatif d'un déplacement de l'engin (1) est un capteur (8) d'un paramètre représentatif de la vitesse de déplacement de l'engin (1), **en ce que** l'engin (1) comprend une mémoire (9) de stockage d'une vitesse prédéterminée de déplacement de l'engin (1) et **en ce que** l'unité (5) de pilotage est configurée pour, à l'état non actionné de l'organe (7) d'activation du dispositif (6) de commande, autoriser la commande du système (4) de manutention avec le dispositif (6) de commande lorsque la vitesse de déplacement de l'engin fournie par le capteur (8) d'un paramètre représentatif de la vitesse de déplacement de l'engin (1) est supérieure à la valeur prédéterminée mémorisée.

4. Engin (1) de manutention de charge selon l'une des revendications 1 à 3, **caractérisé en ce que** l'unité (5) de pilotage est configurée pour empêcher une réinitialisation de la temporisation (T2) de présence lorsque le système (16) de détection d'une présence de l'opérateur audit poste (15) détecte une absence de l'opérateur.

5. Engin (1) de manutention de charge selon l'une des revendications 1 à 4, caractérisé en que l'unité (5) de pilotage est configurée pour réinitialiser la temporisation (T2) de présence en fonction au moins des signaux de commande reçus du dispositif (6) de commande.

6. Engin (1) de manutention de charge selon la revendication 2 ou la revendication 3 ou l'une des revendications 4 ou 5 prise en combinaison avec l'une des revendications 2 ou 3, **caractérisé en ce que** l'unité (5) de pilotage est configurée pour réinitialiser la temporisation (T2) de présence en fonction des données fournies par le capteur (8) d'un paramètre représentatif d'un déplacement de l'engin (1).

7. Engin (1) de manutention de charge selon la revendication 2 ou la revendication 3 ou l'une des revendications 4 à 6 prise en combinaison avec l'une des revendications 2 ou 3, caractérisé en que l'unité (5) de pilotage est configurée pour, lors du passage de l'état actionné à l'état non actionné de l'organe (7) d'activation, démarrer au moins une temporisation (T1) dite temporisation de commande définissant un intervalle de temps, et pour empêcher le pilotage du système (4) de manutention avec le dispositif (6) de commande à l'issue de l'écoulement de l'intervalle de temps défini par la temporisation (T1) de commande et en que l'unité (5) de pilotage est configurée pour réinitialiser la temporisation (T1) de commande en fonction au moins des données fournies par le capteur (8) d'un paramètre représentatif d'un déplacement de l'engin et éventuellement en fonction au moins des signaux de commande reçus du dispositif (6) de commande.

8. Engin (1) de manutention de charge selon la revendication 7, caractérisé en que l'intervalle de temps défini par la temporisation (T1) de commande est de durée supérieure à l'intervalle de temps défini par la temporisation (T2) de présence.

9. Engin (1) de manutention de charge selon l'une des revendications 1 à 8, caractérisé en que le dispositif (6) de commande du système (4) de manutention est un dispositif (6) de commande comprenant au moins deux éléments (10, 11, 12a, 12b) de commande.

10. Engin (1) de manutention de charge selon la revendication 9, caractérisé en que ce l'engin (1) comprend un système (3) d'entrainement en déplacement du châssis (2) roulant, en ce que le dispositif (6) de commande du système (4) de manutention est un dispositif (6) de commande polyvalent et en ce qu'au moins l'un (10) des éléments (10, 11) de commande est configuré pour commander au moins une partie du système (4) de manutention et en ce que l'autre élément (11) de commande, ou un autre (11) des éléments (10, 11, 12a, 12b) de commande est configuré pour commander au moins une partie du système (3) d'entrainement en déplacement de l'engin (1).

11. Engin (1) de manutention de charge selon l'une des revendications 1 à 10, caractérisé en que ce que l'organe (7) d'activation est porté par le dispositif (6) de commande du système (4) de manutention.

12. Engin (1) de manutention de charge selon l'une des revendications 1 à 11, caractérisé en que l'organe (7) d'activation est un capteur de détection de présence d'une main d'un opérateur sur la partie (61) manuelle du dispositif (6) de commande.

13. Engin (1) de manutention de charge selon l'une des revendications 1 à 12, caractérisé en que le système (4) de manutention comprend au moins un bras (13) de manutention monté sur ledit châssis (2) déplaçable en rotation autour d'un axe (21) de rotation horizontal et au moins un actionneur (14) d'entrainement en déplacement dudit bras (13) de manutention autour dudit axe (21) de rotation horizontal.

14. Engin (1) de manutention de charge selon l'une des revendications 1 à 13, **caractérisé en ce que** le poste (15) de conduite affecte la forme d'une cabine (151) de pilotage à l'intérieur de laquelle est disposé au moins un siège (18) sur lequel l'opérateur peut prendre place, ladite cabine (151) de pilotage étant fermée par une porte (19) et **en ce que** le ou au moins l'un des capteurs (17) de présence du système (16) de détection d'une présence de l'opérateur audit poste (15) équipe le siège (18).

15. Engin (1) de manutention de charge selon l'une des revendications 1 à 14, caractérisé en que le système (16) de détection d'une présence de l'opérateur audit poste (15) comprend au moins un capteur (22) de détection de l'ouverture et/ou de la fermeture de la porte (19).

## Patentansprüche

1. Lasthandhabungsmaschine (1) (24), umfassend:
- einen Rahmen (2), der mit einem Führerstand (15) ausgestattet ist,
- ein Lasthandhabungssystem (4), das vom Rahmen getragen wird,
- eine Steuervorrichtung (6) des Lasthandhabungssystems (4), wobei diese Steuervorrichtung (6), die von einem Bediener manuell betätigt werden kann, einen manuellen Teil (61) umfasst, der konfiguriert ist, um manuell ergriffen zu werden,
- eine Steuereinheit (5), wobei die Steuereinheit (5) konfiguriert ist, um Steuersignale von der Steuervorrichtung (6) zu empfangen,
- ein Aktivierungsorgan (7) der Steuervorrichtung (6), das manuell betätigt werden kann, wobei die Steuereinheit (5) konfiguriert ist, um, im betätigten Zustand des Aktivierungsorgans (7), die Steuerung des Handhabungssystems (4) in Funktion mindestens der Steuersignale, die von der Steuervorrichtung (6) empfangen werden, zuzulassen,
wobei der Führerstand (15) mit einem Nachweissystem (16) ausgestattet ist, das ermöglicht, eine Anwesenheit oder eine Abwesenheit des Bedieners auf dem Stand (15) nachzuweisen, wobei dieses Nachweissystem (16) mindestens einen Anwesenheitssensor (17) umfasst, der verschieden von der Steuervorrichtung (6) ist, wobei die Steuereinheit (5) konfiguriert ist, um, im nicht betätigten Zustand des Aktivierungsorgans (7), nach dem Übergang vom betätigten Zustand in den nicht betätigten Zustand des Aktivierungsorgans (7) die Steuerung mindestens des Handhabungssystems (4) mit der Steuervorrichtung (6) in Funktion mindestens des Zustand der Abwesenheit oder Anwesenheit des Bedieners , der vom Nachweissystem (16) einer Anwesenheit des Bedieners auf dem Stand (15) nachgewiesen wird, zu verhindern oder zuzulassen,
**dadurch gekennzeichnet, dass** die Steuereinheit (5) konfiguriert ist, um, beim Übergang vom betätigten Zustand in den nicht betätigten Zustand des Aktivierungsorgans (7), mindestens eine Zeitschaltung (T2), bezeichnet als Anwesenheitszeitschaltung, die ein Zeitintervall definiert, auszulösen, und um die Steuerung des Handhabungssystems (4) mit den Steuersignalen, die durch die Steuervorrichtung (6) an die Steuereinheit (5) geliefert werden, beim Ablauf des Zeitintervalls, das von der Zeitschaltung (T2) definiert wird, zu verhindern, und dadurch, dass die Steuereinheit (5) konfiguriert ist, um die Anwesenheitszeitschaltung (T2) in Funktion mindestens des Zustands der Abwesenheit oder Anwesenheit des Bedieners, der vom Nachweissystem (16) einer Anwesenheit des Bedieners auf dem Stand (15) nachgewiesen wird, zurückzusetzen.

2. Lasthandhabungsmaschine (1) (24) nach Anspruch 1, **dadurch gekennzeichnet, dass** die Handhabungsmaschine (1) einen Sensor (8) eines Parameters umfasst, der repräsentativ für eine Verschiebung der Maschine (1) ist, und dadurch, dass die Steuereinheit (5) konfiguriert ist, um die Steuerung des Handhabungssystems (4) mit der Steuervorrichtung (6) in Funktion mindestens des Parameters zuzulassen, der repräsentativ für eine Verschiebung der Maschine (1) ist.

3. Lasthandhabungsmaschine (1) (24) nach Anspruch 2, **dadurch gekennzeichnet, dass** der Sensor (8) eines Parameters, der repräsentativ für eine Verschiebung der Maschine (1) ist, ein Sensor (8) eines Parameters ist, der repräsentativ für die Geschwindigkeit der Verschiebung der Maschine (1) ist, dadurch, dass die Maschine (1) einen Speicher (9) zum Aufzeichnen einer vorbestimmten Verschiebungsgeschwindigkeit der Maschine (1) umfasst, und dadurch, dass die Steuereinheit (5) konfiguriert ist, um, im nicht betätigten Zustand des Aktivierungsorgans (7) der Steuervorrichtung (6), die Steuerung des Handhabungssystems (4) mit der Steuervorrichtung (6) zuzulassen, wenn die Geschwindigkeit der Verschiebung der Maschine, die vom Sensor (8) eines Parameters geliefert wird, der repräsentativ für die Geschwindigkeit der Verschiebung der Maschine (1) ist, grösser als der aufgezeichnete vorbestimmte Wert ist.

4. Lasthandhabungsmaschine (1) nach einem der Ansprüche 1 bis 3, **dadurch gekennzeichnet, dass** die Steuereinheit (5) konfiguriert ist, um ein Zurücksetzen der Anwesenheitszeitschaltung (T2) zu verhindern, wenn das Nachweissystem (16) einer Anwesenheit des Bedieners auf dem Stand (15) eine Abwesenheit des Bedieners nachweist.

5. Lasthandhabungsmaschine (1) nach einem der Ansprüche 1 bis 4, **dadurch gekennzeichnet, dass** die Steuereinheit (5) konfiguriert ist, um die Anwesenheitszeitschaltung (T2) in Funktion mindestens der Steuersignale, die von der Steuervorrichtung (6) erhalten werden, zurückzusetzen.

6. Lasthandhabungsmaschine (1) nach Anspruch 2 oder Anspruch 3 oder einem der Ansprüche 4 oder 5 in Kombination mit einem der Ansprüche 2 oder 3, **dadurch gekennzeichnet, dass** die Steuereinheit (5) konfiguriert ist, um die Anwesenheitszeitschaltung (T2) in Funktion der Daten, die vom Sensor (8) eines Parameters geliefert werden, der repräsentativ für eine Verschiebung der Maschine (1) ist, zurückzusetzen.

7. Lasthandhabungsmaschine (1) nach Anspruch 2 oder Anspruch 3 oder einem der Ansprüche 4 bis 6 in Kombination mit einem der Ansprüche 2 oder 3, **dadurch gekennzeichnet, dass** die Steuereinheit (5) konfiguriert ist, um, beim Übergang vom betätigten Zustand in den nicht betätigten Zustand des Aktivierungsorgans (7), mindestens eine Zeitschaltung (T1), bezeichnet als Steuerzeitschaltung, die ein Zeitintervall definiert, auszulösen, und um die Steuerung des Handhabungssystems (4) mit der Steuervorrichtung (6) beim Ablauf des Zeitintervalls, das von der Steuerzeitschaltung (T1) definiert wird, zu verhindern, und dadurch, dass die Steuereinheit (5) konfiguriert ist, um die Steuerzeitschaltung (T1) in Funktion mindestens der Daten zurückzusetzen, die vom Sensor (8) eines Parameters geliefert werden, der repräsentativ für eine Verschiebung der Maschine (1) ist, und eventuell in Funktion mindestens der Steuersignale, die von der Steuervorrichtung (6) erhalten werden.

8. Lasthandhabungsmaschine (1) nach Anspruch 7, **dadurch gekennzeichnet, dass** das Zeitintervall, das von der Steuerzeitschaltung (T1) definiert wird, länger dauert als das Zeitintervall, das von der Anwesenheitszeitschaltung (T2) definiert wird.

9. Lasthandhabungsmaschine (1) nach einem der Ansprüche 1 bis 8, **dadurch gekennzeichnet, dass** die Steuervorrichtung (6) des Handhabungssystems (4) eine Steuervorrichtung (6) ist, die mindestens zwei Steuerelemente (10, 11, 12a, 12b) umfasst.

10. Lasthandhabungsmaschine (1) nach Anspruch 9, **dadurch gekennzeichnet, dass** die Maschine ein System (3) zum Verschiebungsantrieb des rollenden Rahmens (2) umfasst, dadurch, dass die Steuervorrichtung (6) des Handhabungssystems (4) eine polyvalente Steuervorrichtung (6) ist, und dadurch, dass mindestens eines (10) der Steuerelemente (10, 11) konfiguriert ist, um mindestens einen Teil des Handhabungssystems (4) zu steuern, und dadurch, dass das andere Steuerelement (11) oder ein anderes (11) der Steuerelemente (10, 11, 12a, 12b) konfiguriert ist, um mindestens einen Teil des Systems (3) zum Verschiebungsantrieb des Rahmens (1) zu steuern.

11. Lasthandhabungsmaschine (1) nach einem der Ansprüche 1 bis 10, **dadurch gekennzeichnet, dass** das Aktivierungsorgan (7) von der Steuervorrichtung (6) des Handhabungssystems (4) getragen wird.

12. Lasthandhabungsmaschine (1) nach einem der Ansprüche 1 bis 11, **dadurch gekennzeichnet, dass** das Aktivierungsorgan (7) ein Sensor zum Nachweis der Anwesenheit einer Hand eines Bedieners auf dem manuellen Teil (61) der Steuervorrichtung (6) ist.

13. Lasthandhabungsmaschine (1) nach einem der Ansprüche 1 bis 12, **dadurch gekennzeichnet, dass** das Handhabungssystem (4) mindestens einen Handhabungsarm (13) umfasst, der auf den Rahmen (2) montiert ist, der in Rotation um eine horizontale Drehachse (21) verschiebbar ist, und mindestens eine Betätigungsvorrichtung (14) zum Verschiebungsantrieb des Handhabungsarms (13) um die horizontale Drehachse (21).

14. Lasthandhabungsmaschine (1) nach einem der Ansprüche 1 bis 13, **dadurch gekennzeichnet, dass** der Führerstand (15) die Form einer Steuerkabine (151) annimmt, in deren Innerem mindestens ein Sitz (18) angeordnet ist, auf dem der Bediener Platz nehmen kann, wobei die Steuerkabine (151) von einer Tür (19) geschlossen ist, und dadurch, dass der oder mindestens einer der Anwesenheitssensoren (17) des Systems zum Nachweis (16) einer Anwesenheit des Bedieners auf dem Stand (15) den Sitz (18) ausstattet.

15. Lasthandhabungsmaschine (1) nach einem der Ansprüche 1 bis 14, **dadurch gekennzeichnet, dass** das System zum Nachweis (16) einer Anwesenheit des Bedieners auf dem Stand (15) mindestens einen Sensor (22) zum Nachweis der Öffnung und/oder des Verschlusses der Tür (19) umfasst.

## Claims

1. A load (24) handling machine (1), comprising:
- a wheeled chassis (2) equipped with a driver station (15),
- a system (4) for handling a load and borne by the chassis,
a control device (6) for controlling the load-handling system (4), this control device (6), able to be actuated manually by an operator, comprising a manual part (61) configured to be grasped in the hand,
- an operating unit (5), the operating unit (5) being configured to receive control signals from said control device (6),
- an activation member (7) for the manually actuatable control device (6), the operating unit (5) being configured so as, when the activation member (7) is in the actuated state, to allow the handling system (4) to be operated as a function at least of the control signals received from the control device (6),
the driver station (15) being equipped with a detection system (16) enabling detection of the presence or absence of the operator at said station (15), this detection system (16) comprising at least one presence detector (17) distinct from the control device (6), the operating unit (5) being configured so as, when the activation member (7) is in the non-actuated state after the activation member (7) has passed from the actuated state to the non-actuated state, to prevent or allow at least the handling system (4) to be operated using the control device (6) at least as a function of the absent or present status of an operator, detected by the detection system (16) for detecting the presence of the operator at said station (15), **characterized in that** the operating unit (5) is configured to start at least one timer (T2) referred to as the presence timer defining a time interval when the activation member (7) passes from the actuated state to the non-actuated state, and to prevent the handling system (4) from being operated using the control signals supplied by the control device (6) to the operating unit (5) when the time interval defined by the presence timer (T2) has elapsed, and **in that** the operating unit (5) is configured to reset the presence timer (T2) as a function of at least the absent or present status of the operator detected by the detection system (16) for detecting the presence of the operator at said station (15).

2. The load (24) handling machine (24) according to claim 1, **characterized in that** the handling machine (1) comprises a sensor (8) sensing a parameter indicative of a movement of the machine (1) and **in that** the operating unit (5) is configured to allow the handling system (4) to be operated using the control device (6) as a function of at least the parameter indicative of a movement of the machine (1).

3. The load (24) handling machine (1) according to claim 2, **characterized in that** the sensor (8) of a parameter indicative of a movement of the machine (1) is a sensor (8) of a parameter indicative of the speed of travel of the machine (1), **in that** the machine (1) comprises a memory (9) for storing a predetermined speed of travel of the machine (1), and **in that** the operating unit (5) is configured so as, when the activation member (7) for activating the control device (6) is in the non-actuated state, to allow the handling system (4) to be operated using the control device (6) when the speed of travel of the machine supplied by the sensor (8) of a parameter indicative of the speed of travel of the machine (1) is greater than the predetermined value stored in memory.

4. The load-handling machine (1) according to one of claims 1 to 3, **characterized in that** the operating unit (5) is configured to prevent the presence timer (T2) from being reset when the detection system (16) for detecting the presence of the operator at said station (15) detects an absence of the operator.

5. The load-handling machine (1) according to one of claims 1 to 4, **characterized in that** the operating unit (5) is configured to reset the presence timer (T2) as a function at least of the control signals received from the control device (6).

6. The load-handling vehicle (1) according to claim 2 or claim 3 or one of claims 4 or 5 taken in combination with one of claims 2 or 3, **characterized in that** the operating unit (5) is configured to reset the presence timer (T2) as a function of the data supplied by the sensor (8) of a parameter indicative of a movement of the machine (1).

7. The load-handling machine (1) according to claim 2 or claim 3 or one of claims 4 to 6 taken in combination with one of claim 2 or 3, **characterized in that** the operating unit (5) is configured so as, when the activation member (7) passes from the actuated state to the non-actuated state, to start at least one timer (T1) called control timer defining a time interval, and to prevent the handling system (4) from being operated using the control device (6) when the time interval defined by the control timer (T1) has elapsed, and **in that** the operating unit (5) is configured to reset the control timer (T1) as a function at least of the data supplied by the sensor (8) of a parameter indicative of a movement of the machine and optionally as a function at least of the control signals received from the control device (6).

8. The load-handling machine (1) according to claim 7, **characterized in that** the time interval defined by the control timer (T1) is longer than the time interval defined by the presence timer (T2).

9. The load-handling vehicle (1) according to one of claims 1 to 8, **characterized in that** the control device (6) for controlling the handling system (4) is a control device (6) comprising at least two control elements (10, 11, 12a, 12b).

10. The load-handling machine (1) according to claim 9, **characterized in that** the machine (1) comprises a drive system (3) driving the movement of the wheeled chassis (2), **in that** the control device (6) for controlling the handling system (4) is a multifunction control device (6), and **in that** at least one (10) of the control elements (10, 11) is configured to control at least part of the handling system (4), and **in that** the other control element (11) or another (11) of the control elements (10, 11, 12a, 12b) is configured to control at least part of the drive system (3) driving the movement of the machine (1).

11. The load-handling machine (1) according to one of claims 1 to 10, **characterized in that** the activation member (7) is borne by the control device (6) for controlling the handling system (4).

12. The load-handling machine (1) according to one of claims 1 to 11, **characterized in that** the activation member (7) is a sensor for detecting the presence of a hand of an operator on the manual part (61) of the control device (6).

13. The load-handling machine (1) according to one of claims 1 to 12, **characterized in that** the handling system (4) comprises at least one handling arm (13) mounted on said chassis (2) rotatable about a horizontal axis of rotation (21) and at least one actuator (14) driving said handling arm (13) in its movement about said horizontal axis of rotation (21).

14. The load-handling vehicle (1) according to one of claims 1 to 13, **characterized in that** the driver station (15) takes the form of an operator cab (151) inside which there is at least one seat (18) on which the operator can sit, said operator cab (151) being closed by a door (19), and **in that** the seat (18) is equipped with the or at least one of the presence-detection sensors (17) of the detection system (16) for detecting the presence of the operator at said station (15).

15. The load-handling vehicle (1) according to one of claims 1 to 14, **characterized in that** the system (16) for detecting the presence of the operator at said station (15) comprises at least one sensor (22) for detecting the opening and/or the closing of the door (19).
